(19) Europäisches Patentamt
European Patent Office
Office européen des brevets

(11) **EP 3 422 803 A1**

(12) **EUROPEAN PATENT APPLICATION**
published in accordance with Art. 153(4) EPC

(43) Date of publication:
**02.01.2019 Bulletin 2019/01**

(51) Int Cl.:
**H04W 88/08** (2009.01)     **H04B 7/04** (2017.01)
**H04B 7/06** (2006.01)

(21) Application number: **16893950.2**

(22) Date of filing: **18.03.2016**

(86) International application number:
**PCT/CN2016/076799**

(87) International publication number:
**WO 2017/156785 (21.09.2017 Gazette 2017/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Huawei Technologies Co., Ltd.
Longgang District
Shenzhen, Guangdong 518129 (CN)**

(72) Inventors:
• **XIONG, Wei
Shenzhen
Guangdong 518129 (CN)**

• **GAO, Quanzhong
Shenzhen
Guangdong 518129 (CN)**
• **LI, Liang
Shenzhen
Guangdong 518129 (CN)**
• **XU, Heng
Shenzhen
Guangdong 518129 (CN)**

(74) Representative: **Maiwald Patent- und
Rechtsanwaltsgesellschaft mbH
Elisenhof
Elisenstraße 3
80335 München (DE)**

(54) **ANTENNA CONNECTION METHOD, DATA TRANSMISSION METHOD, TRANSMITTING DEVICE, AND BASEBAND PROCESSING DEVICE**

(57)     An antenna splicing method, a data sending method, a transmit apparatus, and a baseband processing apparatus are disclosed. In embodiments of the present invention, a plurality of remote radio units whose antenna quantity and antenna volume are relatively small are spliced, and the plurality of remote radio units are connected to a baseband processing unit. An antenna quantity of a transmit apparatus obtained through splicing is a sum of antenna quantities of the plurality of remote radio units. Compared with an integrated antenna, a plurality of remote radio units whose antenna volumes are relatively small are spliced, so that antenna deployment is facilitated, contiguous coverage of a broadcast service can be implemented, and performance of a broadcast beam and a service beam is also relatively greatly improved.

Remote radio unit RRU 1 —— RRU m

$N_{t1}$ antennas ··· $N_{tm}$ antennas

Map into $N_t'$ antennas through virtual antenna mapping

Baseband processing apparatus

FIG. 2

**Description**

**TECHNICAL FIELD**

The present invention relates to the field of communications technologies, and in particular, to an antenna splicing method, a data sending method, a transmit apparatus, and a baseband processing apparatus.

**BACKGROUND**

With continuous development of communications technologies, people have increasingly high requirements on a wireless communication rate and stricter requirements on wireless communication quality. From a voice service in the 2nd generation (English: 2nd Generation, 2G for short) mobile communications technology era to a data service in the 3G and to a multimedia service in the 4G at present, the wireless communication rate exponentially increases. During development of the 4G and the 5G, a multiple-antenna technology, as a key technology, plays a role of supporting communications development. In a wireless communications system, a transmit end and a receive end can obtain a spatial multiplexing or diversity gain by using a plurality of antennas to obtain a higher rate.

The multiple-antenna technology is a key technology for coping with increase of a wireless data service. A maximum quantity of antennas that is supported in an existing standard is only eight ports (English: port), and beamforming only in a horizontal dimension is supported. There is greater potential to further improve a system capacity. With development of a Long Term Evolution (English: Long Term Evolution, LTE for short) multiple-input multiple-output (English: Multiple-Input Multiple-Output, MIMO for short) technology, and particularly, with advent of the 5G era, there are more users of spatial multiplexing, and a service volume of a single user also explosively increases. Eight antennas on a base station side are already far from satisfying a service requirement, and the base station side needs to provide more antennas to provide more multiplexed streams for the users to satisfy an increasingly high service requirement.

In an existing LTE technology, a service sent on the base station side may be mainly classified into two parts, namely, a broadcast service and a data service. The broadcast service is sent by using a cell-specific reference signal (English: Cell-Specific Reference Signal, CRS for short) port of LTE for channel sounding and demodulation. The broadcast service centers on all users in a cell and is required to have wide coverage to cover all the users in the cell. The data service centers on a user, and channel sounding is performed by using different pilots based on different transmission modes. The data service is required to have a narrow and converged data beam aligned to the user, and avoid interference with a remaining user while ensuring a high signal to interference plus noise ratio (English: Signal to Interference plus Noise, SINR for short) and high reference signal received power (English: Reference Signal Received Power, RSRP for short) of the user. Therefore, both coverage of a broadcast signal and high reliability of a service signal need to be ensured on the base station side.

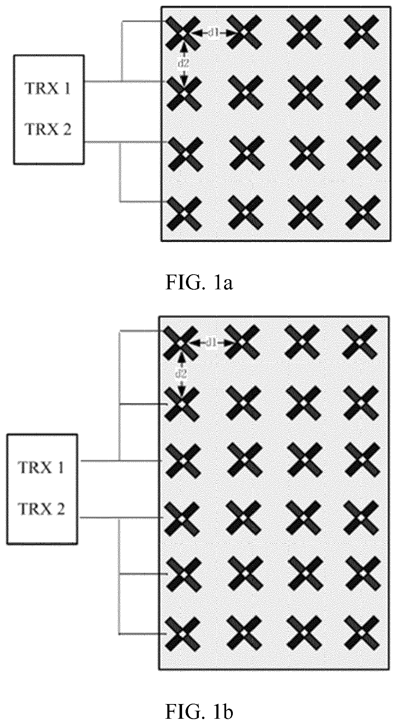

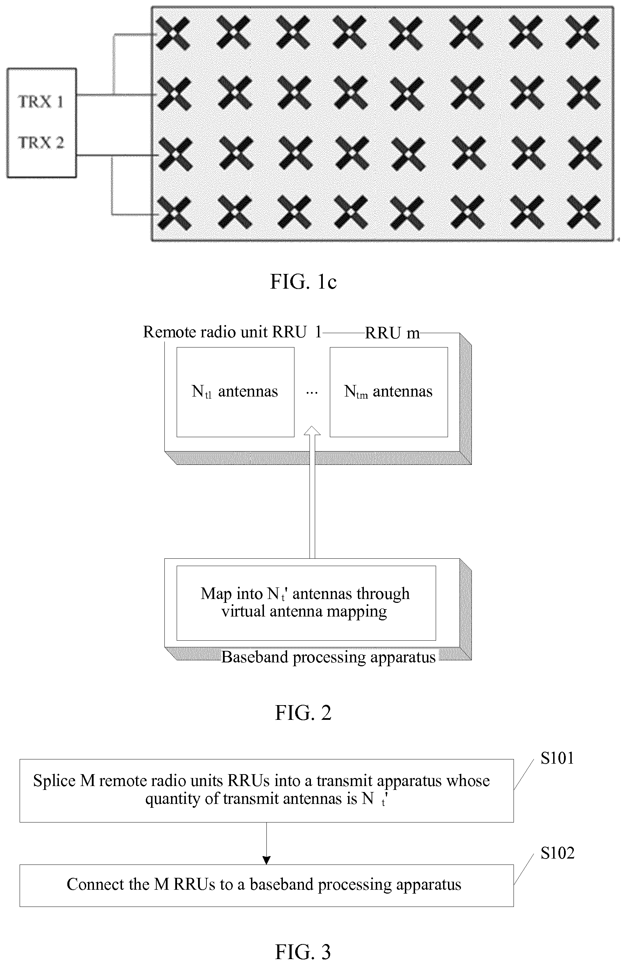

FIG. 1a and FIG. 1b show two antenna topologies of an existing 16T integrated antenna. Elements in a vertical dimension in FIG. 1a and FIG. 1b are mapped into 2Tx, and elements in a horizontal dimension are mapped into 8Tx (including dual-polarization), which is 16T in total. 32T (where FIG. 1c is a topology diagram of an existing 32T integrated antenna) and 64T antenna topologies are similar to the 16T antenna topology. It can be learned from the figures that elements of an integrated antenna are consecutively arranged. This means that multiple antennas (16 antennas and more) have a relatively large antenna size and a large antenna weight, resulting in difficult deployment in a mounting scenario of the antennas. The multiple antennas can only be mounted in a macro station scenario, and therefore are not suitable for a small-range metrocell such as a micro station. On the other hand, transmit power of the antenna is limited by requirements on a volume and heat dissipation. When the antenna size is excessively large, the transmit power is reduced and therefore system performance is affected.

**SUMMARY**

Embodiments of the present invention provide an antenna splicing method, a data sending method, a transmit apparatus, and a baseband processing apparatus, to facilitate antenna deployment and improve signal coverage and performance of an antenna array.

According to a first aspect, an antenna splicing method is provided. The method includes: splicing M remote radio units RRUs into a transmit apparatus whose quantity of transmit antennas is $N_t'$, where the M RRUs respectively include $N_{t1}$ to $N_{tm}$ transmit antennas, $N_t'$ is a sum of the $N_{t1}$ to $N_{tm}$, and $N_t'$ and $N_{t1}$ to $N_{tm}$ are positive integers greater than 1; and connecting the M RRUs to a baseband processing apparatus.

In this implementation, a plurality of remote radio units whose antenna quantity and antenna volume are relatively small are spliced, and the plurality of remote radio units are connected to a baseband processing unit. An antenna quantity of the transmit apparatus obtained through splicing is a sum of antenna quantities of the plurality of remote radio units. Compared with an integrated antenna, the plurality of remote radio units whose antenna volumes are relatively small are spliced, so that antenna deployment is facilitated, contiguous coverage of a broadcast service can be implemented, and performance of a broadcast beam and a service beam is also relatively greatly improved.

With reference to the first aspect, in a first possible implementation, quantities of the $N_{t1}$ to $N_{tm}$ are equal or not equal.

In this implementation, remote radio units whose quantities of transmit antennas are equal or not equal may be spliced. A splicing form is flexible, and transmit apparatuses having different quantities of transmit antennas can be obtained through splicing.

With reference to the first aspect, in a second possible implementation, the splicing M RRUs into a transmit apparatus whose quantity of transmit antennas is $N_t'$ includes: arranging the M RRUs in parallel in a horizontal dimension; or arranging the M RRUs in parallel in a vertical dimension; or arranging the M RRUs into a matrix including $N_1$ rows and $K_1$ columns, where $N_1$ and $K_1$ are positive integers and $M=K_1 \times N_1$; or arranging the M RRUs into a triangle; or arranging the M RRUs into a circle.

In this implementation, different quantities of remote radio units may be spliced into different shapes based on a requirement, and a splicing form is flexible.

With reference to the second possible implementation of the first aspect, in a third possible implementation, antenna installation platforms of the M RRUs are in a same plane.

In this implementation, antenna installation platforms of the plurality of remote radio units are in a same plane. This facilitates uniform splicing and can make the transmit apparatus obtained through splicing have a neat and aesthetic appearance.

With reference to the second possible implementation of the first aspect or the third possible implementation of the first aspect, in a fourth possible implementation, downtilts of the antennas of the M RRUs are the same.

In this implementation, when the remote radio units are spliced, downtilts of the plurality of remote radio units are the same. This facilitates uniform splicing and can make the transmit apparatus obtained through splicing have a neat and aesthetic appearance.

With reference to the first aspect, in a fifth possible implementation, the method further includes: performing uplink and downlink reciprocity calibration on the M RRUs, and obtaining a calibration weight, to align downlink transmission delays.

In this implementation, the uplink and downlink reciprocity calibration is performed, and the downlink transmission delays are aligned, so that a channel for uplink and downlink reciprocation is relatively perfect.

According to a second aspect, a data sending method is provided. The method includes: mapping to-be-sent data to virtual antenna ports after scrambling, modulation, layer mapping, and/or precoding on the to-be-sent data; mapping, to physical antenna ports through virtual antenna mapping, the to-be-sent data mapped to the virtual antenna ports, where $N_t'$ transmit antennas corresponding to the physical antenna ports are formed by splicing M remote radio units RRUs, the M RRUs respectively include $N_{t1}$ to $N_{tm}$ transmit antennas, $N_t'$ is a sum of the $N_{t1}$ to $N_{tm}$, and $N_t'$ and $N_{t1}$ to $N_{tm}$ are positive integers greater than 1; and sending the to-be-sent data by using the physical antenna ports.

In this implementation, after a plurality of remote radio units are spliced into a transmit apparatus, a plurality of transmit antennas in the plurality of remote radio units are mapped into a plurality of physical antennas of the transmit apparatus by using a virtual antenna mapping technology, and a transmitted signal is transmitted out from a plurality of physical antenna ports corresponding to the plurality of physical antennas.

With reference to the second aspect, in a first possible implementation, the mapping, to physical antenna ports through virtual antenna mapping, the to-be-sent data mapped to the virtual antenna ports includes: mapping, to the physical antenna ports based on the following virtual antenna mapping formula, the to-be-sent data mapped to the virtual antenna ports: $Y^j(n_s, k, l)=w_m * X^i(n_s, k, l)$, where $Y^j(n_s, k, l)$ is a signal sent from each physical antenna port, $n_s$ is a timeslot number of an LTE frame structure, k is a subcarrier number, 1 is a timeslot number, $w_m$ is a mapping weight, and $X^i(n_s, k, l)$ is a pilot or data of LTE.

According to a third aspect, a transmit apparatus is provided. The transmit apparatus includes $N_t'$ transmit antennas formed by splicing M remote radio units RRUs. The M RRUs respectively include $N_{t1}$ to $N_{tm}$ transmit antennas, $N_t'$ is a sum of the $N_{t1}$ to $N_{tm}$, and $N_t'$ and $N_{t1}$ to $N_{tm}$ are positive integers greater than 1. The M RRUs are connected to a baseband processing apparatus.

According to a fourth aspect, a baseband processing apparatus is provided. The baseband processing apparatus has a function of implementing operations of the baseband processing apparatus in the foregoing method. The function may be implemented by hardware, or may be implemented by hardware executing corresponding software. The hardware or software includes one or more modules corresponding to the foregoing function.

In a possible implementation, the baseband processing apparatus includes: a processing unit, configured to map to-be-sent data to virtual antenna ports after scrambling, modulation, layer mapping, and/or precoding on the to-be-sent data, where the processing unit is further configured to map, to physical antenna ports through virtual antenna mapping, the to-be-sent data mapped to the virtual antenna ports. $N_t'$ transmit antennas corresponding to the physical antenna ports are formed by splicing M remote radio units RRUs, the M RRUs respectively include $N_{t1}$ to $N_{tm}$ transmit

antennas, $N_t'$ is a sum of the $N_{t1}$ to $N_{tm}$, and $N_t'$ and $N_{t1}$ to $N_{tm}$ are positive integers greater than 1; and a sending unit, configured to send the to-be-sent data by using the physical antenna ports.

In another possible implementation, the baseband processing apparatus includes: a processor and a transmitter. The processor is configured to map to-be-sent data to virtual antenna ports after scrambling, modulation, layer mapping, and/or precoding on the to-be-sent data. The processor is further configured to map, to physical antenna ports through virtual antenna mapping, the to-be-sent data mapped to the virtual antenna ports. $N_t'$ transmit antennas corresponding to the physical antenna ports are formed by splicing M remote radio units RRUs, the M RRUs respectively include $N_{t1}$ to $N_{tm}$ transmit antennas, $N_t'$ is a sum of the $N_{t1}$ to $N_{tm}$, and $N_t'$ and $N_{t1}$ to $N_{tm}$ are positive integers greater than 1. The transmitter is configured to send the to-be-sent data by using the physical antenna ports.

The antenna splicing method, the data sending method, the transmit apparatus, and the baseband processing apparatus that are provided in the embodiments of the present invention have the following beneficial effects:

The plurality of remote radio units whose antenna quantity and antenna volume are relatively small are spliced, and the plurality of remote radio units are connected to the baseband processing unit. The antenna quantity of the transmit apparatus obtained through splicing is a sum of the antenna quantities of the plurality of remote radio units. Compared with an integrated antenna, the plurality of remote radio units whose antenna volumes are relatively small are spliced, so that antenna deployment is facilitated, contiguous coverage of a broadcast service can be implemented, and performance of a broadcast beam and a service beam is also relatively greatly improved.

## BRIEF DESCRIPTION OF DRAWINGS

To describe the technical solutions in the embodiments of the present invention or in the Current technology more clearly, the following briefly describes the accompanying drawings used in describing the embodiments. Apparently, the accompanying drawings in the following description show merely some embodiments of the present invention, and a person of ordinary skill in the art may still derive other drawings from these accompanying drawings without creative efforts.

FIG. 1a and FIG. 1b are diagrams of two antenna topologies of an existing 16T integrated antenna;

FIG. 1c is a diagram of a topology of an existing 32T integrated antenna;

FIG. 2 is a diagram of a system architecture of a transmit apparatus and a baseband processing apparatus according to an embodiment of the present invention;

FIG. 3 is a schematic flowchart of an antenna splicing method according to an embodiment of the present invention;

FIG. 4a to FIG. 4f are schematic diagrams of examples of antenna splicing according to an embodiment of the present invention;

FIG. 5 is a schematic diagram of an example of a CRS beam pattern and a schematic diagram of beam coverage in vertical and horizontal tangent planes according to an embodiment of the present invention;

FIG. 6 is a schematic flowchart of a data sending method according to an embodiment of the present invention;

FIG. 7A and FIG. 7B are a schematic diagram of an example of virtual antenna mapping according to an embodiment of the present invention;

FIG. 8 is a schematic structural diagram of a baseband processing apparatus according to an embodiment of the present invention; and

FIG. 9 is a schematic structural diagram of another baseband processing apparatus according to an embodiment of the present invention.

## DESCRIPTION OF EMBODIMENTS

FIG. 2 is a diagram of a system architecture of a transmit apparatus and a baseband processing apparatus according to an embodiment of the present invention. M remote radio units (English: Remote Radio Unit, RRU for short) respectively include $N_{t1}$ to $N_{tm}$ transmit antennas, and the M RRUs are spliced into the transmit apparatus whose quantity of transmit antennas is $N_t'$. $N_t'$ is a sum of the $N_{t1}$ to $N_{tm}$, and $N_t'$ and $N_{t1}$ to $N_{tm}$ are positive integers greater than 1. The M RRUs are connected to the baseband processing apparatus by using an optical port. The baseband processing apparatus may be a baseband unit (English: Baseband Unit, BBU for short) or the like. The baseband processing apparatus maps the $N_{t1}$ to $N_{tm}$ transmit antennas in the M RRUs into the $N_t'$ physical antennas of the transmit apparatus by using a virtual antenna mapping (English: Virtual Antenna Mapping, VAM for short) technology, and transmits a transmitted signal out from $N_t'$ physical antenna ports.

In this embodiment of the present invention, a plurality of remote radio units whose antenna quantity and antenna volume are relatively small are spliced, and the plurality of remote radio units are connected to a baseband processing unit. An antenna quantity of the transmit apparatus obtained through splicing is a sum of antenna quantities of the plurality of remote radio units. Compared with an integrated antenna, the plurality of remote radio units whose antenna volumes are relatively small are spliced, so that antenna deployment is facilitated, contiguous coverage of a broadcast service can be implemented, and performance of a broadcast beam and a service beam is also relatively greatly improved.

FIG. 3 is a schematic flowchart of an antenna splicing method according to an embodiment of the present invention. The method includes the following steps.

S101: Splice M remote radio units RRUs into a transmit apparatus whose quantity of transmit antennas is $N_t'$.

The M RRUs respectively include $N_{t1}$ to $N_{tm}$ transmit antennas, $N_t'$ is a sum of the $N_{t1}$ to $N_{tm}$, and $N_t'$ and $N_{t1}$ to $N_{tm}$ are positive integers greater than 1.

Optionally, quantities of the $N_{t1}$ to $N_{tm}$ transmit antennas may be equal or not equal.

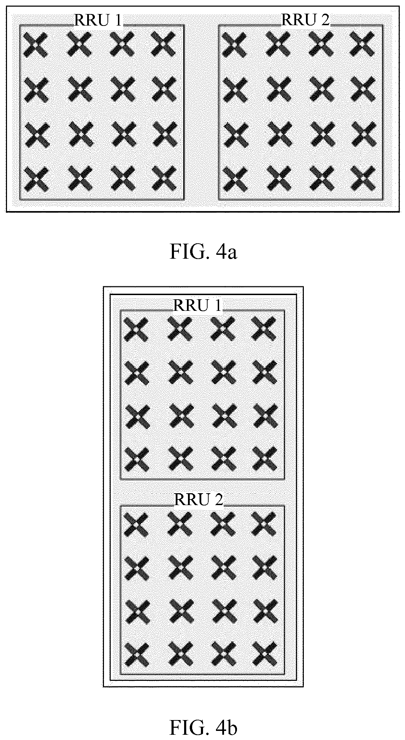

Splicing the M RRUs into the transmit apparatus whose quantity of transmit antennas is $N_t'$ is described below by using an example. FIG. 4a to FIG. 4f are schematic diagrams of examples of antenna splicing according to an embodiment of the present invention.

As shown in FIG. 4a, two 8T RRUs are spliced into a 16T transmit apparatus. The transmit apparatus may alternatively be an RRU. The two 8T RRUs are arranged in parallel in a horizontal dimension, and antenna installation platforms of the two RRUs are in a same plane, and downtilts may be both 12°. 8T refers to a product of a quantity of ports in a vertical dimension and a quantity of ports in the horizontal dimension. In FIG. 4a, quantities of ports of the RRU 1 and the RRU 2 in the vertical dimension may be 1, that is, elements in the vertical dimension are connected to a port. The quantity of ports in the horizontal dimension may be 8, that is, each of eight elements is connected to a port. The two 8T RRUs have 16 transmit antennas in total through splicing herein, thereby implementing a function of a 16T RRU.

As shown in FIG. 4b, two 16T RRUs are spliced into a 32T RRU. The two 16T RRUs are placed in parallel in a vertical dimension, and downtilts of the two RRUs may be both 10°.

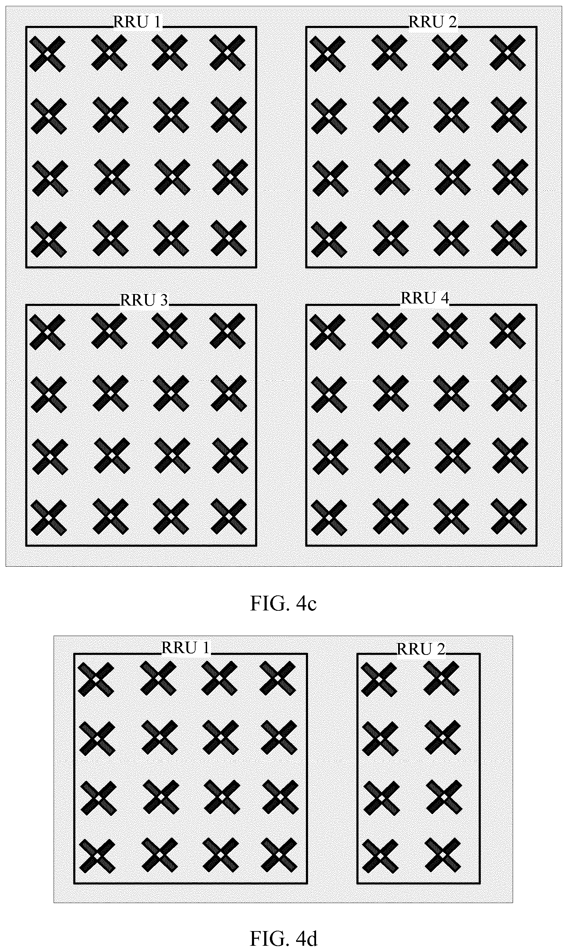

As shown in FIG. 4c, four 16T RRUs are spliced into a 64T RRU. The four 16T RRUs may be horizontally placed or may be vertically placed. Alternatively, as shown in FIG. 4c, the four 16T RRUs may be placed into a rectangle having two rows and two columns. That is, the M RRUs are arranged into a matrix including $N_1$ rows and $K_1$ columns, where $N_1$ and $K_1$ are positive integers and $M = K_1 \times N_1$.

As shown in FIG. 4d, an 8T RRU and a 4T RRU are spliced into a 12T RRU, and the two RRUs may be placed in a horizontal dimension.

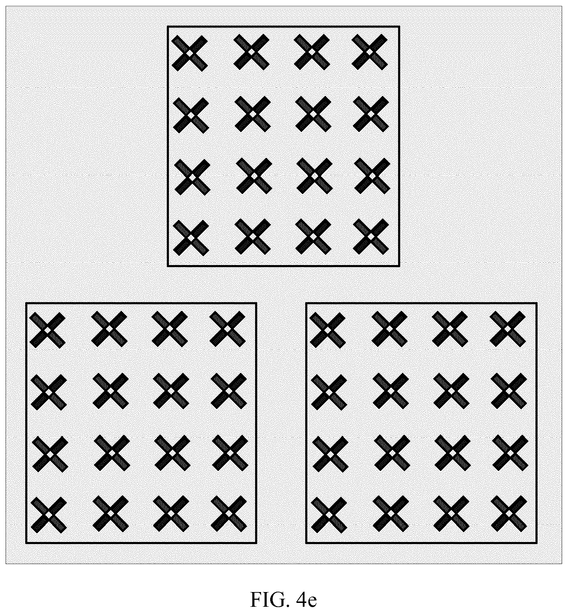

As shown in FIG. 4e, three 8T RRUs are spliced into a 24T RRU, and the three RRUs are placed into a triangle.

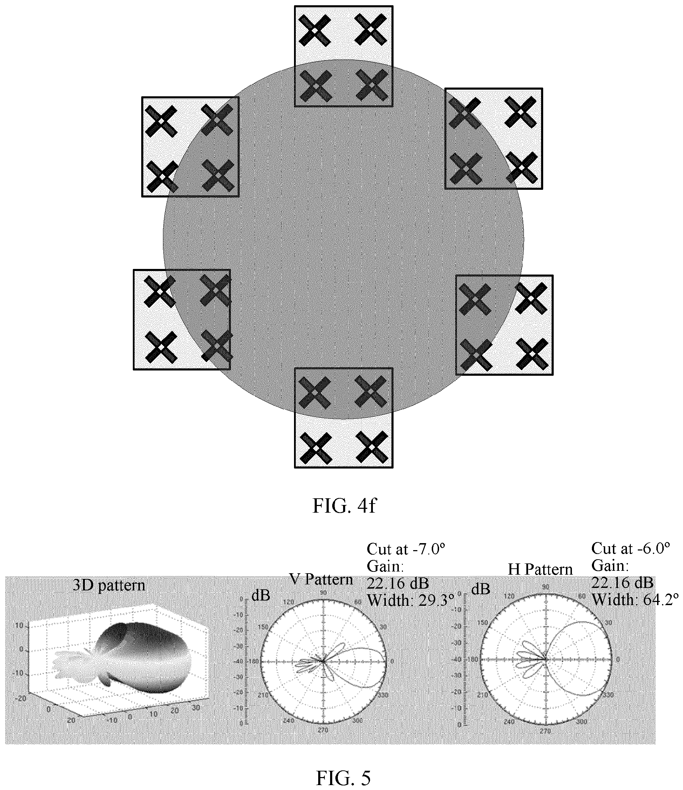

As shown in FIG. 4f, six 4T RRUs are spliced into a 24T RRU, and the six RRUs are placed into of a circle.

The foregoing are merely examples, and antenna splicing of a transmit apparatus having any quantity of antennas is not limited to the foregoing splicing forms. In addition, in the foregoing example, antenna installation platforms of the M RRUs may be in a same plane, and downtilts of the antennas of the M RRUs may be the same.

The transmit apparatus is formed by splicing RRUs having a relatively small antenna volume, and therefore facilitates antenna deployment and mounting.

Compared with a transmit apparatus having a same volume, the transmit apparatus provided in this embodiment can include more transmit antennas, and therefore have wider signal coverage. In addition, it can be learned through a test that, a broadcast beam and a service beam have a gain of 3 dB or more.

S102: Connect the M RRUs to a baseband processing apparatus.

The M RRUs are connected to the baseband processing apparatus by using an optical port or the like. The baseband processing apparatus maps the $N_{t1}$ to $N_{tm}$ transmit antennas in the M RRUs into the $N_t'$ physical antennas of the transmit apparatus by using a virtual antenna mapping technology, and transmits a transmitted signal out from $N_t'$ physical antenna ports. The baseband processing apparatus may be a BBU.

Optionally, the method further includes the following step:

performing uplink and downlink reciprocity calibration on the M RRUs, and obtaining a calibration weight ,to align downlink transmission delays.

In a time division duplex (English: Time Division Duplex, TDD for short) system, uplink and downlink channels are reciprocal. However, the reciprocation is imperfect, and reciprocity needs to be calibrated. Only after the reciprocity is calibrated, the downlink transmission delays can be aligned. The delay also affects a mapping weight of virtual antenna mapping subsequently performed by the baseband processing apparatus. Certainly, a solution of antenna splicing may not only be applied to the TDD system.

FIG. 5 is a schematic diagram of an example of a CRS beam pattern and a schematic diagram of beam coverage in vertical and horizontal tangent planes according to an embodiment of the present invention. The leftmost figure in FIG. 5 shows a CRS beam pattern, that is, a 3D beam pattern, of slicing two 8T antennas into a 16T antenna. It can be learned from the rightmost figure of the horizontal tangent plane of the 3D beam in FIG. 5 that in terms of coverage in a horizontal dimension, coverage of an antenna obtained by splicing two antennas may reach 65 degrees, thereby satisfying a service requirement. In terms of transmit power, transmit power one time or two times that in the Current technology may be achieved, to provide a better SINR for user equipment, thereby obtaining better performance. A figure in the middle of FIG. 5 is a figure of the vertical tangent plane of the 3D beam.

According to the antenna splicing method provided in this embodiment of the present invention, a plurality of remote radio units whose antenna quantity and antenna volume are relatively small are spliced, and the plurality of remote radio units are connected to a baseband processing unit. An antenna quantity of the transmit apparatus obtained through splicing is a sum of antenna quantities of the plurality of remote radio units. Compared with an integrated antenna, the plurality of remote radio units whose antenna volumes are relatively small are spliced, so that antenna deployment is facilitated, contiguous coverage of a broadcast service can be implemented, and performance of a broadcast beam and a service beam is also relatively greatly improved.

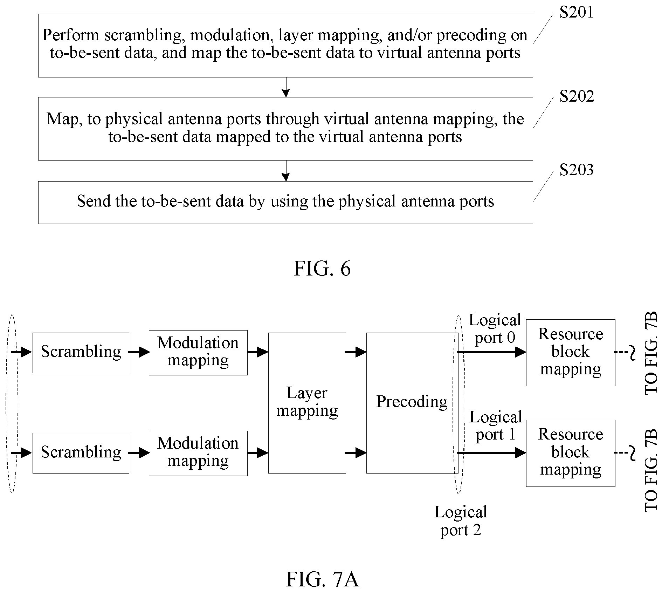

FIG. 6 is a schematic flowchart of a data sending method according to an embodiment of the present invention. The method includes the following steps.

S201: Map to-be-sent data to virtual antenna ports after scrambling, modulation, layer mapping, and/or precoding on the to-be-sent data.

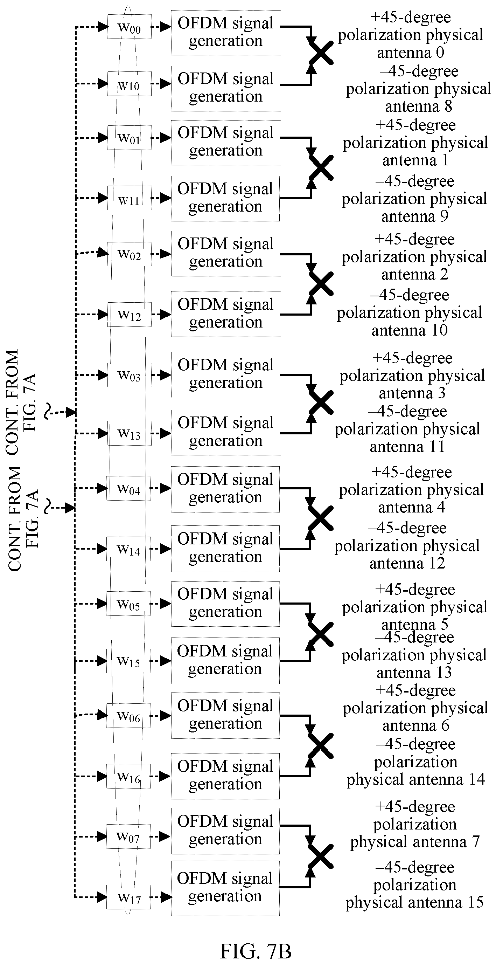

As shown in FIG. 7A and FIG. 7B, FIG. 7A and FIG. 7B are a schematic diagram of an example of virtual antenna mapping according to an embodiment of the present invention. FIG. 7A and FIG. 7B show that a baseband processing apparatus completes mapping by using physical antenna ports of a 16T transmit apparatus obtained by splicing two 8T RRUs. Virtual antenna mapping in another splicing manner is similar to the mapping. A virtual antenna mapping technology is mapping, to physical antenna ports, to-be-sent data mapped to virtual antenna ports. First, map to-be-sent data to virtual antenna ports after scrambling, modulation, layer mapping, and/or precoding on the to-be-sent data.

S202: Map, to physical antenna ports through virtual antenna mapping, the to-be-sent data mapped to the virtual antenna ports.

In this embodiment, a transmit apparatus is formed by slicing a plurality of RRUs, that is, $N_t'$ transmit antennas corresponding to the physical antenna ports are formed by splicing M remote radio units RRUs. The M RRUs each include $N_{t1}$ to $N_{tm}$ transmit antennas. $N_t'$ is a sum of the $N_{t1}$ to $N_{tm}$, and $N_t'$ and $N_{t1}$ to $N_{tm}$ are positive integers greater than 1.

How to map, to the physical antenna ports, the to-be-sent data mapped to the virtual antenna ports is specifically described by using FIG. 7A and FIG. 7B as an example. In FIG. 7A and FIG. 7B, a stream of to-be-sent data is mapped to eight physical antenna ports of the transmit apparatus in a polarization direction by using eight antennas of an RRU, and the eight antennas may have different transmission directions and different mapping weights. Another stream of to-be-sent data is mapped to eight physical antenna ports of the transmit apparatus in another polarization direction by using eight antennas of another RRU, and the eight antennas may have different transmission directions and different mapping weights. In FIG. 7A and FIG. 7B, angles in the two polarization directions are +45° and -45°.

Specifically, the to-be-sent data mapped to the virtual antenna ports is mapped to the physical antenna ports based on the following virtual antenna mapping formula (1):

$$Y^j (n_s, k, l) = w_m * X^i (n_s, k, l) \quad \text{formula (1)}.$$

$Y^j (n_s, k, l)$ is a signal sent from each physical antenna port, $n_s$ is a timeslot number of an LTE frame structure, that is, a slot number, k is a subcarrier number, 1 is a timeslot number, $w_m$ is a mapping weight, and $X^i (n_s, k, 1)$ is a pilot or data of LTE, that is, a signal value of a CRS port. The signal value of the CRS port is determined and configured by a base station side.

A virtual antenna mapping formula corresponding to the example in FIG. 7A and FIG. 7B is formula (2):

$$\begin{bmatrix} Y^0(n_s,k,l) \\ Y^1(n_s,k,l) \\ Y^2(n_s,k,l) \\ Y^3(n_s,k,l) \\ Y^4(n_s,k,l) \\ Y^5(n_s,k,l) \\ Y^6(n_s,k,l) \\ Y^7(n_s,k,l) \\ Y^8(n_s,k,l) \\ Y^9(n_s,k,l) \\ Y^{10}(n_s,k,l) \\ Y^{11}(n_s,k,l) \\ Y^{12}(n_s,k,l) \\ Y^{13}(n_s,k,l) \\ Y^{14}(n_s,k,l) \\ Y^{15}(n_s,k,l) \end{bmatrix} = \begin{bmatrix} w_0 & w_3 \\ w_1 & w_3 \\ w_2 & w_1 \\ w_3 & w_0 \\ w_0 & -w_3 \\ w_1 & -w_2 \\ w_2 & -w_1 \\ w_3 & -w_0 \\ w_0 & w_3 \\ w_1 & w_3 \\ w_2 & w_1 \\ w_3 & w_0 \\ -w_0 & w_3 \\ -w_1 & w_2 \\ -w_2 & w_1 \\ -w_3 & w_0 \end{bmatrix} \begin{bmatrix} X^0(n_s,k,l) \\ X^1(n_s,k,l) \end{bmatrix}$$

formula (2)

In this example, if j=0 to 15 and there are two streams of code words, i=0 to 1, and $[w_0\ w_1\ w_2\ w_3]$=[1 0.9708 -0.206 0]. The mapping weight affects a beam shape, constrains a beam width within 65 degrees, and is obtained by searching a program. Certainly, another mapping weight may alternatively be used.

In formula (2), two columns of a mapping weight matrix represent mapping weights of two streams of data. The first eight rows and the last eight rows in each column separately represent a mapping weight of eight antennas of an RRU.

S203: Send the to-be-sent data by using the physical antenna ports.

After being mapped to the physical antenna ports from the virtual antenna ports, the to-be-sent data is sent out from the physical antenna ports.

According to the data sending method provided in this embodiment of the present invention, after a plurality of remote radio units are spliced into the transmit apparatus, a plurality of transmit antennas in the plurality of remote radio units are mapped into a plurality of physical antennas of the transmit apparatus by using a virtual antenna mapping technology, and a transmitted signal is transmitted out from a plurality of physical antenna ports corresponding to the plurality of physical antennas.

It should be noted that, for brief description, the foregoing method embodiments are represented as a series of actions. However, a person skilled in the art should appreciate that the present invention is not limited to the described order of the actions, because according to the present invention, some steps may be performed in other orders or simultaneously. In addition, a person skilled in the art should also appreciate that all the embodiments described in the specification are preferred embodiments, and the related actions and modules are not necessarily mandatory to the present invention.

An embodiment of the present invention provides a transmit apparatus. The transmit apparatus includes $N_t'$ transmit antennas formed by splicing M remote radio units RRUs. The M RRUs each include $N_{t1}$ to $N_{tm}$ transmit antennas, $N_t'$ is a sum of the $N_{t1}$ to $N_{tm}$, and $N_t'$ and $N_{t1}$ to $N_{tm}$ are positive integers greater than 1. The M RRUs are connected to a baseband processing apparatus.

Optionally, quantities of the $N_{t1}$ to $N_{tm}$ transmit antennas may be equal or not equal.

Optionally, the M RRUs are arranged in parallel in a horizontal dimension.

Alternatively, the M RRUs are arranged in parallel in a vertical dimension.

Alternatively, the M RRUs are arranged into a matrix including $N_1$ rows and $K_1$ columns, where $N_1$ and $K_1$ are positive integers and $M=K_1 \times N_1$.

Alternatively, the M RRUs are arranged into a triangle.

Alternatively, the M RRUs are arranged into a circle.

Optionally, antenna installation platforms of the M RRUs may be in a same plane.

Optionally, downtilts of the antennas of the M RRUs may be the same.

The transmit apparatus is formed by splicing RRUs having a relatively small antenna volume, and therefore facilitates antenna deployment and mounting.

Compared with a transmit apparatus having a same volume, the transmit apparatus provided in this embodiment can include more transmit antennas, and therefore have wider signal coverage. In addition, it can be learned through a test that, a broadcast beam and a service beam have a gain of 3 dB or more.

The M RRUs are connected to the baseband processing apparatus by using an optical port or the like. The baseband processing apparatus maps the $N_{t1}$ to $N_{tm}$ transmit antennas in the M RRUs into the $N_t'$ physical antennas of the transmit apparatus by using a virtual antenna mapping technology, and transmits a transmitted signal out from $N_t'$ physical antenna ports. The baseband processing apparatus may be a BBU.

Optionally, the transmit apparatus may further include:

a calibration unit, configured to perform uplink and downlink reciprocity calibration on the M RRUs, and obtain a calibration weight, to align downlink transmission delays.

In a TDD system, uplink and downlink channels are reciprocal. However, the reciprocation is imperfect, and reciprocity needs to be calibrated. Only after the reciprocity is calibrated, the downlink transmission delays can be aligned. The delay also affects a mapping weight of virtual antenna mapping subsequently performed by the baseband processing apparatus. Certainly, a solution of antenna splicing may not only be applied to the TDD system.

FIG. 5 is a schematic diagram of an example of a CRS beam pattern and a schematic diagram of beam coverage in vertical and horizontal tangent planes according to an embodiment of the present invention. The leftmost figure in FIG. 5 shows a CRS beam pattern, that is, a 3D beam pattern, of slicing two 8T antennas into a 16T antenna. It can be learned from the rightmost figure of the horizontal tangent plane of the 3D beam in FIG. 5 that in terms of coverage in a horizontal dimension, coverage of an antenna obtained by splicing two antennas may reach 65 degrees, thereby satisfying a service requirement. In terms of transmit power, transmit power one time or two times that in the Current technology may be achieved, to provide a better SINR for user equipment, thereby obtaining better performance. A figure in the middle of FIG. 5 is a figure of the vertical tangent plane of the 3D beam.

According to the transmit apparatus provided in this embodiment of the present invention, a plurality of remote radio units whose antenna quantity and antenna volume are relatively small are spliced, and the plurality of remote radio units are connected to a baseband processing unit. An antenna quantity of the transmit apparatus obtained through splicing is a sum of antenna quantities of the plurality of remote radio units. Compared with an integrated antenna, the plurality of remote radio units whose antenna volumes are relatively small are spliced, so that antenna deployment is facilitated, contiguous coverage of a broadcast service can be implemented, and performance of a broadcast beam and a service beam is also relatively greatly improved.

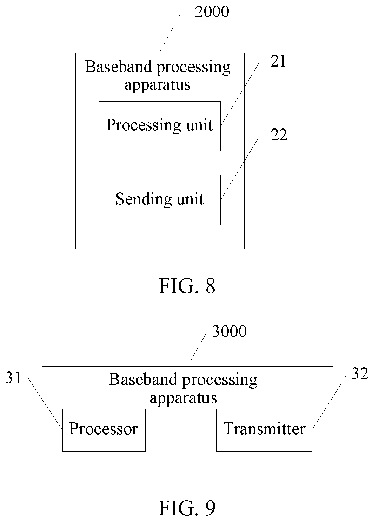

FIG. 8 is a schematic structural diagram of a baseband processing apparatus according to an embodiment of the present invention. The baseband processing apparatus 2000 includes a processing unit 21 and a sending unit 22.

The processing unit 21 is configured to map to-be-sent data to virtual antenna ports after scrambling, modulation, layer mapping, and/or precoding on the to-be-sent data.

As shown in FIG. 7A and FIG. 7B, FIG. 7A and FIG. 7B are a schematic diagram of an example of virtual antenna mapping according to an embodiment of the present invention. FIG. 7A and FIG. 7B show that a baseband processing apparatus completes mapping by using physical antenna ports of a 16T transmit apparatus obtained by splicing two 8T RRUs. Virtual antenna mapping in another splicing manner is similar to the mapping. A virtual antenna mapping technology is mapping, to physical antenna ports, to-be-sent data mapped to virtual antenna ports. The processing unit 21 is specifically configured to map to-be-sent data to virtual antenna ports after scrambling, modulation, layer mapping, and/or precoding on the to-be-sent data.

The processing unit 21 is further configured to map, to physical antenna ports through virtual antenna mapping, the to-be-sent data mapped to the virtual antenna ports.

In this embodiment, a transmit apparatus is formed by slicing a plurality of RRUs, that is, $N_t'$ transmit antennas corresponding to the physical antenna ports are formed by splicing M remote radio units RRUs. The M RRUs each include $N_{t1}$ to $N_{tm}$ transmit antennas. $N_t'$ is a sum of the $N_{t1}$ to $N_{tm}$, and $N_t'$ and $N_{t1}$ to $N_{tm}$ are positive integers greater than 1.

How to map the to-be-sent data from the virtual antenna ports to the physical antenna ports is specifically described by using FIG. 7A and FIG. 7B as an example. In FIG. 7A and FIG. 7B, a stream of to-be-sent data is mapped to eight physical antenna ports of the transmit apparatus in a polarization direction by using eight antennas of an RRU, and the eight antennas may have different transmission directions and different mapping weights. Another stream of to-be-sent data is mapped to eight physical antenna ports of the transmit apparatus in another polarization direction by using eight antennas of another RRU, and the eight antennas may have different transmission directions and different mapping weights. In FIG. 7A and FIG. 7B, angles in the two polarization directions are +45° and -45°.

Specifically, the processing unit 21 is specifically configured to map, to the physical antenna ports based on a virtual antenna mapping formula (1), the to-be-sent data mapped to the virtual antenna ports.

A virtual antenna mapping formula corresponding to the example in FIG. 7A and FIG. 7B is formula (2).

The sending unit 22 is configured to send the to-be-sent data by using the physical antenna ports.

After being mapped to the physical antenna ports from the virtual antenna ports, the to-be-sent data is sent out from the physical antenna ports.

According to the baseband processing apparatus provided in this embodiment of the present invention, after a plurality of remote radio units are spliced into the transmit apparatus, a plurality of transmit antennas in the plurality of remote radio units are mapped into a plurality of physical antennas of the transmit apparatus by using a virtual antenna mapping technology, and a transmitted signal is transmitted out from a plurality of physical antenna ports corresponding to the plurality of physical antennas.

FIG. 9 is a schematic structural diagram of another baseband processing apparatus according to an embodiment of the present invention. The baseband processing apparatus 3000 includes a processor 31 and a transmitter 32.

The processor 31 is configured to map to-be-sent data to virtual antenna ports after scrambling, modulation, layer mapping, and/or precoding on the to-be-sent data.

The processor 31 is further configured to map, to physical antenna ports through virtual antenna mapping, the to-be-sent data mapped to the virtual antenna ports. $N_t'$ transmit antennas corresponding to the physical antenna ports are formed by splicing M remote radio units RRUs, the M RRUs each include $N_{t1}$ to $N_{tm}$ transmit antennas, $N_t'$ is a sum of the $N_{t1}$ to $N_{tm}$, and $N_t'$ and $N_{t1}$ to $N_{tm}$ are positive integers greater than 1.

The transmitter 32 is configured to send the to-be-sent data by using the physical antenna ports.

In an implementation, the processor 31 is specifically configured to:

map, to the physical antenna ports based on the following virtual antenna mapping formula, the to-be-sent data mapped to the virtual antenna ports:

$$Y^j (n_s, k, l) = w_m * X^i (n_s, k, l).$$

$Y^j (n_s, k, l)$ is a signal sent from each physical antenna port, $n_s$ is a timeslot number of an LTE frame structure, k is a subcarrier number, 1 is a timeslot number, $w_m$ is a mapping weight, and $X^i (n_s, k, l)$ is a pilot or data of LTE.

According to the baseband processing apparatus provided in this embodiment of the present invention, after a plurality of remote radio units are spliced into a transmit apparatus, a plurality of transmit antennas in the plurality of remote radio units are mapped into a plurality of physical antennas of the transmit apparatus by using a virtual antenna mapping technology, and a transmitted signal is transmitted out from a plurality of physical antenna ports corresponding to the plurality of physical antennas.

In the foregoing embodiments, the descriptions of the embodiments have respective focuses. For a part that is not described in detail in an embodiment, refer to related descriptions in other embodiments.

Steps in the method in the embodiments of the present invention may be adjusted, combined, or deleted according to an actual requirement.

Units in the apparatus in the embodiments of the present invention may be adjusted, combined, or deleted according to an actual requirement. A person skilled in the art may integrate or combine different embodiments and characteristics of different embodiments described in this specification.

With descriptions of the foregoing embodiments, a person skilled in the art may clearly understand that the present invention may be implemented by hardware, firmware or a combination thereof. When the present invention is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a computer. The following is used as an example but is not limited: The computer readable medium may include a random access memory (Random Access Memory, RAM), a read-only memory (Read-Only Memory, ROM), an electrically erasable programmable read-only memory (Electrically Erasable Programmable Read-Only Memory, EEPROM), a compact disc read-only memory (Compact Disc Read-Only Memory, CD-ROM) or other optical disc storage, a disk storage medium or other disk storage, or any other medium that can be used to carry or store expected program code in a command or data structure form and can be accessed by a computer. In addition, any connection may be appropriately defined as a computer-readable medium. For example, if software is transmitted from a website, a server or another remote source by using a coaxial cable, an optical fiber cable, a twisted pair, a digital subscriber line (Digital Subscriber Line, DSL) or wireless technologies such as infrared ray, radio and microwave, the coaxial cable, optical fiber cable, twisted pair, DSL or wireless technologies such as infrared ray, radio and microwave are included in fixation of a medium to which they belong. For example, a disk (Disk) and disc (disc) used by the present invention includes a compact disc (CD), a laser disc, an optical disc, a digital versatile disc (DVD), a floppy disk and a Blu-ray disc, where the disk generally copies data by a magnetic means, and the disc copies data optically by a laser means. The foregoing combination should also be included in the protection scope of the computer-readable medium.

In conclusion, the foregoing descriptions are merely examples of embodiments of the technical solutions of the present invention, but are not intended to limit the protection scope of the present invention. Any modification, equivalent replacement, or improvement made without departing from the spirit and principle of the present invention shall fall within the protection scope of the present invention.

**Claims**

1.   An antenna splicing method, wherein the method comprises:

splicing M remote radio units RRUs into a transmit apparatus whose quantity of transmit antennas is $N_t'$, wherein the M RRUs respectively comprise $N_{t1}$ to $N_{tm}$ transmit antennas, $N_t'$ is a sum of the $N_{t1}$ to $N_{tm}$, and $N_t'$ and $N_{t1}$ to $N_{tm}$ are positive integers greater than 1; and
connecting the M RRUs to a baseband processing apparatus.

2.   The method according to claim 1, wherein quantities of the $N_{t1}$ to $N_{tm}$ are equal or not equal.

3.   The method according to claim 1, wherein the splicing M RRUs into a transmit apparatus whose quantity of transmit antennas is $N_t'$ comprises:

arranging the M RRUs in parallel in a horizontal dimension; or
arranging the M RRUs in parallel in a vertical dimension; or
arranging the M RRUs into a matrix comprising $N_1$ rows and $K_1$ columns, wherein $N_1$ and $K_1$ are positive integers and $M=K_1 \times N_1$; or
arranging the M RRUs into a triangle; or
arranging the M RRUs into a circle.

4.   The method according to claim 3, wherein antenna installation platforms of the M RRUs are in a same plane.

5.   The method according to claim 3 or 4, wherein downtilts of the antennas of the M RRUs are the same.

6.   The method according to claim 1, wherein the method further comprises:

performing uplink and downlink reciprocity calibration on the M RRUs, and obtaining a calibration weight , to align downlink transmission delays.

7.   A data sending method, wherein the method comprises:

mapping to-be-sent data to virtual antenna ports after scrambling, modulation, layer mapping, and/or precoding on the to-be-sent data;
mapping, to physical antenna ports through virtual antenna mapping, the to-be-sent data mapped to the virtual antenna ports, wherein $N_t'$ transmit antennas corresponding to the physical antenna ports are formed by splicing M remote radio units RRUs, the M RRUs each comprise $N_{t1}$ to $N_{tm}$ transmit antennas, $N_t'$ is a sum of the $N_{t1}$ to $N_{tm}$, and $N_t'$ and $N_{t1}$ to $N_{tm}$ are positive integers greater than 1; and
sending the to-be-sent data by using the physical antenna ports.

8.   The method according to claim 7, wherein the mapping, to physical antenna ports through virtual antenna mapping, the to-be-sent data mapped to the virtual antenna ports comprises:

mapping, to the physical antenna ports based on the following virtual antenna mapping formula, the to-be-sent data mapped to the virtual antenna ports:

$$Y^j (n_s, k, l) = w_m * X^i (n_s, k, l),$$

wherein
$Y^j (n_s, k, l)$ is a signal sent from each physical antenna port, $n_s$ is a timeslot number of an LTE frame structure, k is a subcarrier number, l is a timeslot number, $w_m$ is a mapping weight, and $X^i$ ($n_s$, k, 1) is a pilot or data of LTE.

9.  A transmit apparatus, wherein the transmit apparatus comprises $N_t'$ transmit antennas formed by splicing M remote radio units RRUs, the M RRUs each comprises $N_{t1}$ to $N_{tm}$ transmit antennas, $N_t'$ is a sum of the $N_{t1}$ to $N_{tm}$, $N_t'$ and $N_{t1}$ to $N_{tm}$ are positive integers greater than 1, and the M RRUs are connected to a baseband processing apparatus.

10. The transmit apparatus according to claim 9, wherein quantities of the $N_{t1}$ to $N_{tm}$ are equal or not equal.

11. The transmit apparatus according to claim 9, wherein
the M RRUs are arranged in parallel in a horizontal dimension; or
the M RRUs are arranged in parallel in a vertical dimension; or
the M RRUs are arranged into a matrix comprising $N_1$ rows and $K_1$ columns, wherein $N_1$ and $K_1$ are positive integers and $M = K_1 \times N_1$; or
the M RRUs are arranged into a triangle; or
the M RRUs are arranged into a circle.

12. The transmit apparatus according to claim 11, wherein antenna installation platforms of the M RRUs are in a same plane.

13. The transmit apparatus according to claim 11 or 12, wherein downtilts of the antennas of the M RRUs are the same.

14. The transmit apparatus according to claim 9, wherein the transmit apparatus further comprises:

a calibration unit, configured to perform uplink and downlink reciprocity calibration on the M RRUs, and obtain a calibration weight, to align downlink transmission delays.

15. A baseband processing apparatus, wherein the apparatus comprises:

a processing unit, configured to map to-be-sent data to virtual antenna ports after scrambling, modulation, layer mapping, and/or precoding on the to-be-sent data, wherein
the processing unit is further configured to map, to physical antenna ports through virtual antenna mapping, the to-be-sent data mapped to the virtual antenna ports, wherein Nt' transmit antennas corresponding to the physical antenna ports are formed by splicing M remote radio units RRUs, and the M RRUs respectively comprise $N_{t1}$ to $N_{tm}$ transmit antennas, $N_t'$ is a sum of the $N_{t1}$ to $N_{tm}$, and $N_t'$ and $N_{t1}$ to $N_{tm}$ are positive integers greater than 1; and
a sending unit, configured to send the to-be-sent data by using the physical antenna ports.

16. The apparatus according to claim 15, wherein the processing unit is specifically configured to:

map, to the physical antenna ports based on the following virtual antenna mapping formula, the to-be-sent data mapped to the virtual antenna ports:

$$Y^j \ (n_s, \ k, \ l) = w_m {*} X^i \ (n_s, \ k, \ l),$$

wherein
$Y^j$ ($n_s$, k, l) is a signal sent from each physical antenna port, $n_s$ is a timeslot number of an LTE frame structure, k is a subcarrier number, 1 is a timeslot number, $w_m$ is a mapping weight, and $X^i$ ($n_s$, k, l) is a pilot or data of LTE.

17. A baseband processing apparatus, wherein the apparatus comprises a processor and a transmitter, wherein
the processor is configured to map to-be-sent data to virtual antenna ports after scrambling, modulation, layer mapping, and/or precoding on the to-be-sent data;
the processor is further configured to map, to physical antenna ports through virtual antenna mapping, the to-be-sent data mapped to the virtual antenna ports, wherein $N_t'$ transmit antennas corresponding to the physical antenna ports are formed by splicing M remote radio units RRUs, the M RRUs respectively comprise $N_{t1}$ to $N_{tm}$ transmit antennas, $N_t'$ is a sum of the $N_{t1}$ to $N_{tm}$, and $N_t'$ and $N_{t1}$ to $N_{tm}$ are positive integers greater than 1; and
the transmitter is configured to send the to-be-sent data by using the physical antenna ports.

18. The apparatus according to claim 17, wherein the processor is specifically configured to:

map, to the physical antenna ports based on the following virtual antenna mapping formula, the to-be-sent data mapped to the virtual antenna ports:

$$Y^j (n_s, k, l) = w_m * X^i (n_s, k, l),$$

wherein
$Y^j (n_s, k, l)$ is a signal sent from each physical antenna port, $n_s$ is a timeslot number of an LTE frame structure, k is a subcarrier number, 1 is a timeslot number, $w_m$ is a mapping weight, and $X^i (n_s, k, 1)$ is a pilot or data of LTE.

FIG. 1a

FIG. 1b

FIG. 1c

FIG. 2

S101

Splice M remote radio units RRUs into a transmit apparatus whose quantity of transmit antennas is $N_t'$

S102

Connect the M RRUs to a baseband processing apparatus

FIG. 3

FIG. 4a

FIG. 4b

FIG. 4c

FIG. 4d

FIG. 4e

FIG. 4f

Cut at -7.0°
Gain:
22.16 dB
Width: 29.3°

Cut at -6.0°
Gain:
22.16 dB
Width: 64.2°

FIG. 5

Perform scrambling, modulation, layer mapping, and/or precoding on to-be-sent data, and map the to-be-sent data to virtual antenna ports — S201

Map, to physical antenna ports through virtual antenna mapping, the to-be-sent data mapped to the virtual antenna ports — S202

Send the to-be-sent data by using the physical antenna ports — S203

FIG. 6

Scrambling → Modulation mapping → Layer mapping → Precoding → Logical port 0 → Resource block mapping ---) TO FIG. 7B

Scrambling → Modulation mapping → Layer mapping → Precoding → Logical port 1 → Resource block mapping ---) TO FIG. 7B

Logical port 2

FIG. 7A

FIG. 7B

2000

Baseband processing apparatus

21

Processing unit

22

Sending unit

FIG. 8

3000

Baseband processing apparatus

31

Processor

32

Transmitter

FIG. 9

# INTERNATIONAL SEARCH REPORT

| | International application No. |
|---|---|
| | PCT/CN2016/076799 |

## A. CLASSIFICATION OF SUBJECT MATTER

H04W 88/08 (2009.01) i; H04B 7/04 (2006.01) i; H04B 7/06 (2006.01) i

According to International Patent Classification (IPC) or to both national classification and IPC

## B. FIELDS SEARCHED

Minimum documentation searched (classification system followed by classification symbols)

H04W; H04Q; H04B; H04L

Documentation searched other than minimum documentation to the extent that such documents are included in the fields searched

Electronic data base consulted during the international search (name of data base and, where practicable, search terms used)

CNPAT, CNKI, WPI, EPODOC: RRU, BBU, VAM, antenna, antennae, connect, virtual, physical, combine, array, sum, add, xiongwei, gao quanzhong

## C. DOCUMENTS CONSIDERED TO BE RELEVANT

| Category* | Citation of document, with indication, where appropriate, of the relevant passages | Relevant to claim No. |
|---|---|---|
| X | CN 102548051 A (HUAWEI TECHNOLOGIES CO., LTD.) 04 July 2012 (04.07.2012) description, paragraphs [0002]-[0005] and [0049], and figures 1, 2 and 5A | 1-6, 9-14 |
| Y | CN 102548051 A (HUAWEI TECHNOLOGIES CO., LTD.) 04 July 2012 (04.07.2012) description, paragraphs [0002]-[0005] and [0049], and figures 1, 2 and 5A | 7, 8, 15-18 |
| Y | CN 104079329 A (HUAWEI TECHNOLOGIES CO., LTD.) 01 October 2014 (01.10.2014) description, paragraphs [0002], [0028]-[0076], and figures 1 and 2 | 7, 8, 15-18 |
| A | CN 101674589 A (ZTE CORPORATION) 17 March 2010 (17.03.2010) the whole document | 1-18 |
| A | US 2012113840 A1 (VODAFONE IP LICENSING LIMITED) 10 May 2012 (10.05.2012) the whole document | 1-18 |

☒ Further documents are listed in the continuation of Box C. ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 16 November 2016 | 14 December 2016 |

| Name and mailing address of the ISA | Authorized officer |
|---|---|
| State Intellectual Property Office of the P. R. China No. 6, Xitucheng Road, Jimenqiao Haidian District, Beijing 100088, China Facsimile No. (86-10) 62019451 | FU, Yuanyuan Telephone No. (86-10) 62413278 |

Form PCT/ISA/210 (second sheet) (July 2009)

22

## INTERNATIONAL SEARCH REPORT

| | International application No. |
|---|---|
| | PCT/CN2016/076799 |

C (Continuation). DOCUMENTS CONSIDERED TO BE RELEVANT

| Category* | Citation of document, with indication, where appropriate, of the relevant passages | Relevant to claim No. |
|---|---|---|
| A | EP 2317667 A2 (VODAFONE GROUP PLC et al.) 04 May 2011 (04.05.2011) the whole document | 1-18 |

Form PCT/ISA /210 (continuation of second sheet ) (July 2009)

## INTERNATIONAL SEARCH REPORT
### Information on patent family members

| | International application No. |
|---|---|
| | PCT/CN2016/076799 |

| Patent Documents referred in the Report | Publication Date | Patent Family | Publication Date |
|---|---|---|---|
| CN 102548051 A | 04 July 2012 | US 2011201268 A1 | 18 August 2011 |
| | | BR PI0920525 A2 | 22 December 2015 |
| | | US 2013288752 A1 | 31 October 2013 |
| | | EP 2782415 A2 | 24 September 2014 |
| | | EP 2352358 A1 | 03 August 2011 |
| | | US 2014287798 A1 | 25 September 2014 |
| | | WO 2010048871 A1 | 06 May 2010 |
| | | CN 101426303 A | 06 May 2009 |
| CN 104079329 A | 01 October 2014 | None | |
| CN 101674589 A | 17 March 2010 | None | |
| US 2012113840 A1 | 10 May 2012 | EP 2469731 A1 | 27 June 2012 |
| EP 2317667 A2 | 04 May 2011 | ES 2363904 A1 | 18 August 2011 |
| | | US 2011122962 A1 | 26 May 2011 |

Form PCT/ISA /210 (patent family annex) (July 2009)